# EUROPEAN PATENT APPLICATION

(11) **EP 4 421 269 A1**
(43) Date of publication of application: **28.08.2024**
(21) Application number: 22883890.0
(22) Date of filing: 14.10.2022
(51) Int. Cl.: E04H 15/60, E04H 15/46

(54) **LENGTH-ADJUSTABLE POLE**

(30) Priority: 22.10.2021 KR 20210142170
(71) Applicant: Meoktong Corp., Goyang-si, Gyeonggi-do 10201 (KR)
(72) Inventor: LEE, Min Kyung, Paju-si, Gyeonggi-do 10884 (KR); RYU, Myeong Hyeon, Goyang-si, Gyeonggi-do 10201 (KR)
(74) Representative: Viering, Jentschura & Partner mbB Patent- und Rechtsanwälte
(86) International application number: PCT/KR2022/015594
(87) International publication number: WO 2023/068667

(57) **Abstract**

The present disclosure relates to a length-adjustable pole. A length adjusting pole is installed inside a main pole to be able to extend and shorten vertically, and at the same time, a length adjusting member is installed inside the length-adjustable pole so that a user can extend and shorten the length adjusting pole to a desired length with a simple action.

## Description

### Technical Field

The present disclosure relates to a length-adjustable pole, wherein a length adjusting pole is installed inside a main pole to be able to extend and shorten vertically, and at the same time, a length adjusting member is installed inside the length adjusting pole so that a user may extend and shorten the length adjusting pole to a desired length with a simple action.

### Background Art

In general, as the standard of living improves and leisure time increases, the leisure product market, which provides professional leisure products related to various leisure activities, is growing. Camping equipment such as a tent or tarp is essential for popularized leisure activities involving outdoor activities such as mountain climbing, traveling and fishing, and various types of camping equipment are provided by various manufacturers.

Camping equipment such as tents and tarps may have different shapes and materials, but all include support poles and tent bodies supported by the poles. The support poles may be formed into a collapsible type for the purpose of facilitating portability or storage of camping equipment. In addition, structural stability is also emphasized to ensure support for support poles applied to large tarps or tents capable of accommodating a large number of people.

The folding type pole is disclosed in Korean Utility Model Publication No. 20-2020-0002457.

A conventional collapsible pole is sequentially inserted so that the length of the second to fifth pipes may be adjusted by sliding, respectively, starting from the first pipe. A locking protrusion is positioned from the inside of the through hole formed at the rear end of the second to fifth pipes, and an elastic member is provided to push the locking protrusion outward. In addition, the collapsible pole is composed of a plurality of locking holes to allow the locking protrusions to be inserted into the front ends of the first to fourth pipes.

However, the conventional collapsible pole is configured to adjust the length of the pipe by inserting and fixing the locking protrusion into the locking hole. In order to adjust the length of the pipe, a user directly presses the locking protrusion to release the fixing of the locking hole and the locking protrusion.

Therefore, the conventional collapsible pole has a problem in that it is inconvenient to adjust the length of the pipe, and furthermore, the fixing of the pipe is not properly achieved because the locking protrusion is not accurately inserted into the locking hole.

### Disclosure

### Technical Problem

The purpose of the present disclosure is to solve the problems of the prior art as described above and to provide a pole having the following characteristics: a length adjusting pole is installed inside a main pole so that the length adjusting pole may be extended and shortened vertically, and a length adjusting member is installed inside the length adjusting pole so that a user may extend or shorten the length adjusting pole to a desired length by means of a simple action.

### Technical Solution

According to the features of the present disclosure for achieving the above object, a length-adjustable pole according to the present disclosure includes: a main pole formed of a hollow tubular body which is vertically elongated, having a locking hole formed by penetrating back and forth on one side surface thereof, and standing on a ground; a length adjusting pole formed of a hollow tubular body that is vertically elongated and installed so as to be vertically slidable inside the main pole; and a length adjusting member elastically and deformably installed inside the main pole, and selectively protruded to the outside of the main pole through the locking hole and locked and fixed when the length adjusting pole moves up and down along the inside of the main pole. The length adjusting member comprises : a locking protrusion which protrudes outwardly through the locking hole when the length adjusting pole is moved up and down; and a pair of elastic support pieces which protrude at both ends of the locking protrusion at a predetermined angle, respectively, and which are made of a flexible plate material, and one end of which is in close contact with the inner surface of the length adjusting pole and the other end of which is fixed to the locking protrusion so as to elastically support the locking protrusion in one direction. The locking protrusion comprises: a pressing part formed in a block shape and having a surface inclined downwardly to guide the pressing operation of the locking protrusion; and a fixing part extending orthogonally to a lower part of the pressing part and being engaged and fixed inside the locking hole.

In the upper end of the pressing part, a locking part extending in an orthogonal direction from the upper part of the pressing part is further provided to be engaged and fixed inside the upper side of the locking hole.

The straight part (H) of the locking part is in the range of 2 mm to 5 mm.

The width (W) of the locking is in the range of 7mm ~ 7.5mm.

The angle of the elastic support piece is installed ranges from 30 ° to 60 °.

The length (L) of the locking protrusion is in the range of 13 mm to 20 mm.

### Advantageous Effects

A length-adjustable pole according to the present disclosure has the following effects.

According to the present disclosure, a length adjusting pole is installed inside a main pole to be able to extend and shorten vertically. Additionally, a length adjusting member is installed within the length adjusting pole to easily extend and shorten it with a simple action.

Therefore, the pole may be easily extended or shortened with a single action, making it more user-friendly and convenient to operate.

In addition, as a pressing part is formed on a locking protrusion, the locking of the locking protrusion may be easily released by a pulling motion of the length-adjusting pole, thereby improving the convenience of operation of the pole.

In addition, a locking part is formed on the locking protrusion and the locking protrusion is locked and fixed to an inner upper end of a locking hole, so that the length adjusting pole may be prevented from extending due to a pulling force generated by strong wind.

In addition, as a fixing part of the locking protrusion is engaged in a direction orthogonal to the locking hole, the holding force of the locking protrusion is improved.

### Description of Drawings

FIG. 1 is a perspective view showing a configuration of a preferred embodiment of a length-adjustable pole according to the present disclosure.
FIG. 2 is a perspective view showing an unfolded state of the length-adjustable pole according to the present disclosure.
FIG. 3 is a cross-sectional view showing a configuration of a preferred embodiment of the length-adjustable pole according to the present disclosure.
FIG. 4 is a cross-sectional view showing an unfolded state of the length-adjustable pole according to the present disclosure.
FIG. 5 is an enlarged cross-sectional view showing a state in which a length adjusting member is installed inside a length adjusting pole in a folded state inside a main pole constituting the embodiment of the present disclosure.
FIG. 6 is an enlarged cross-sectional view showing a state in which the length adjusting member is engaged and fixed to the locking hole in a state in which the length adjusting pole is extended to the outside of the main pole constituting the embodiment of the present disclosure.
FIG. 7 is a front enlarged view showing a state in which the length adjusting member is engaged and fixed to the locking hole in a state in which the length adjusting pole is extended to the outside of the main pole constituting the embodiment of the present disclosure.
FIG. 8 is a perspective view showing the configuration of the length adjusting member constituting the embodiment of the present disclosure.
FIG. 9 is a front view showing the configuration of the length adjusting member constituting an embodiment of the present disclosure.
FIG. 10 is a side view showing the configuration of the length adjusting member constituting an embodiment of the present disclosure.
FIG. 11 is a cross-sectional view showing a state in which the locking protrusion constituting another embodiment of the present disclosure is fixed to a locking hole.
FIG. 12 is a front view showing a configuration of the length adjusting member constituting another embodiment of the present disclosure.

### Best Mode

Hereinafter, a preferred embodiment of a length-adjustable pole according to the present disclosure will be described in detail with reference to the accompanying drawings.

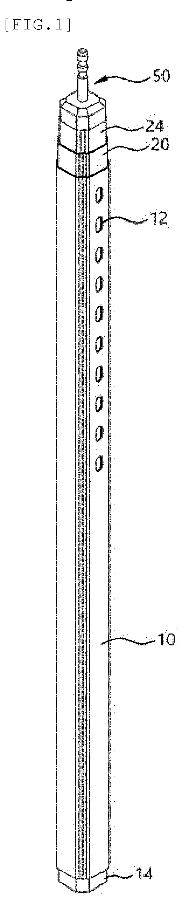

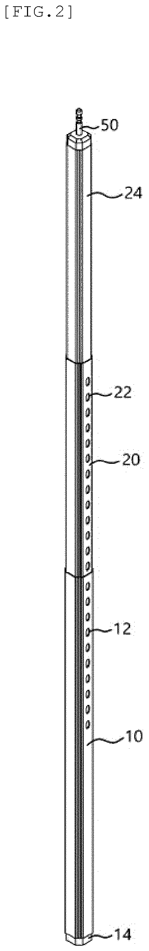

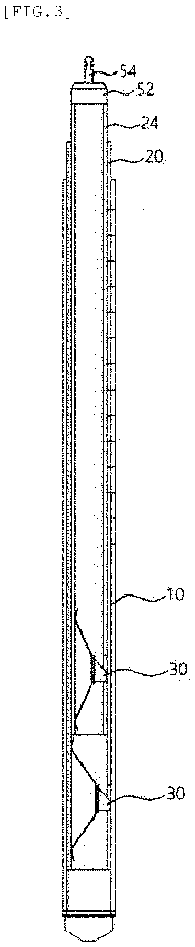

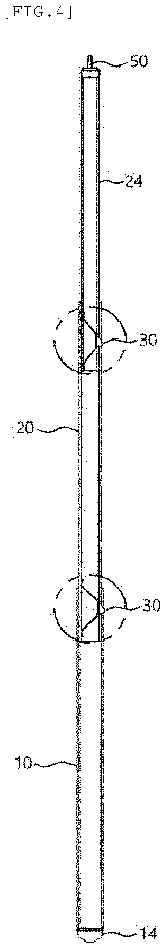

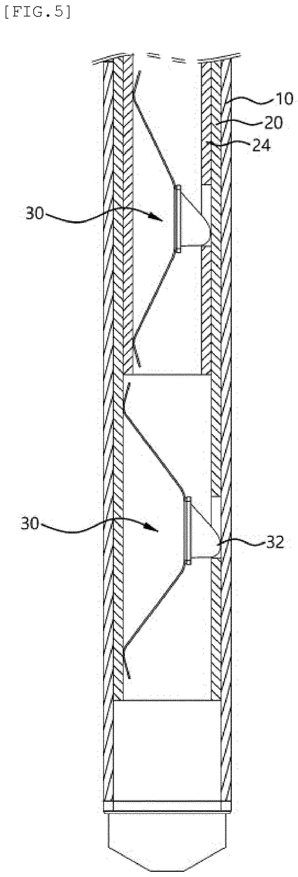

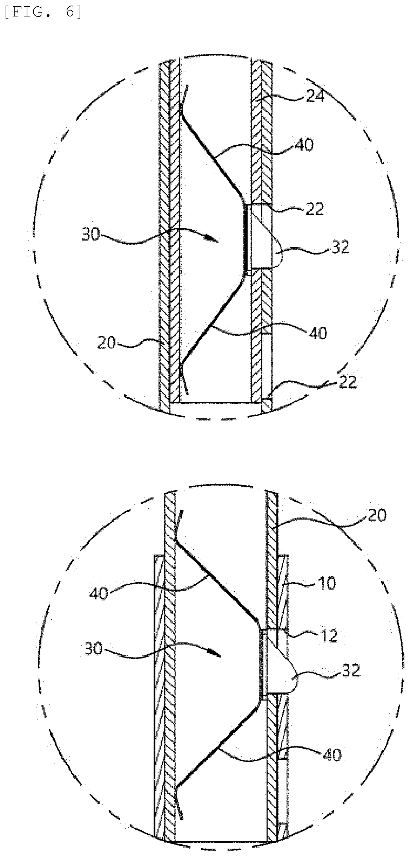

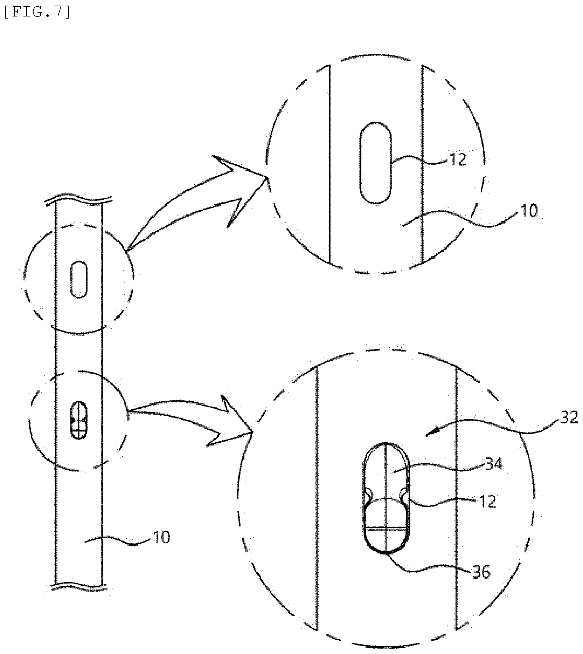

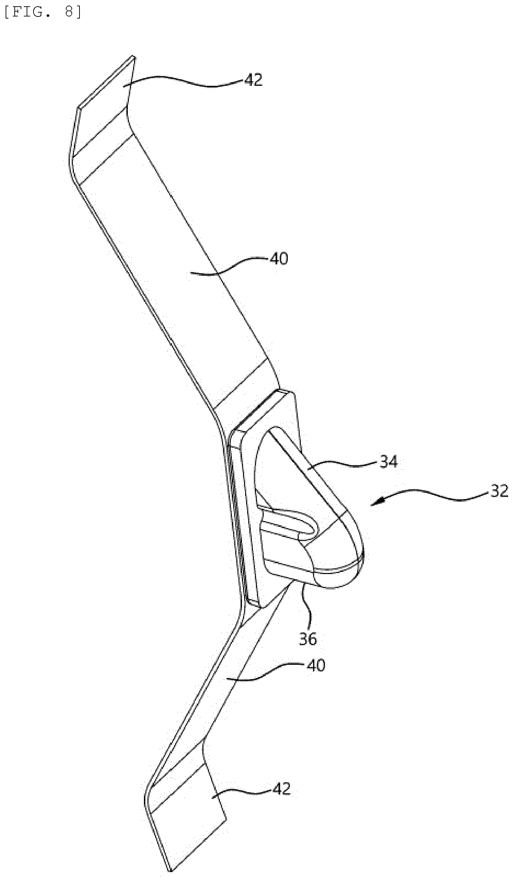

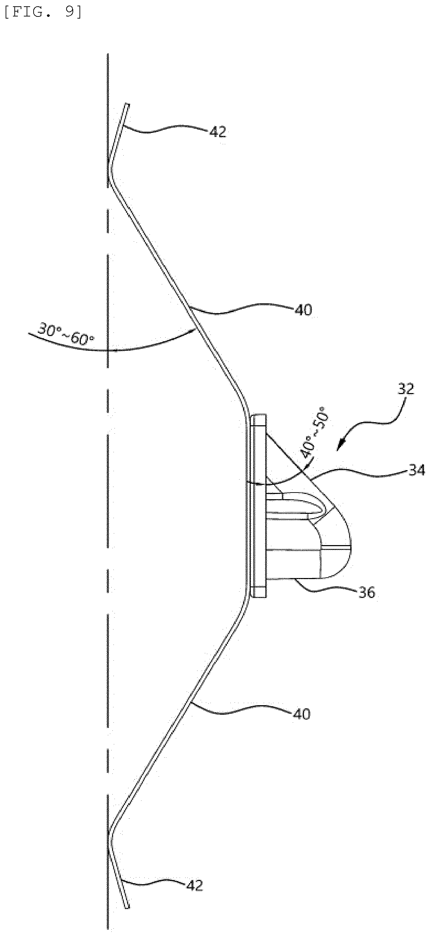

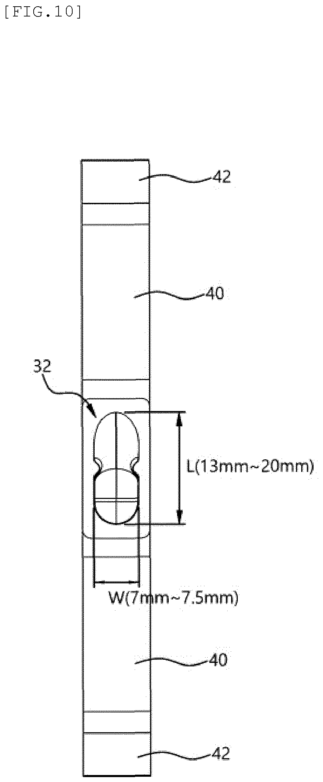

FIG. 1 is a perspective view showing a configuration of a preferred embodiment of a length-adjustable pole according to the present disclosure, FIG. 2 is a perspective view showing an unfolded state of the length-adjustable pole according to the present disclosure, and FIG. 3 is a cross-sectional view showing a configuration of a preferred embodiment of the length-adjustable pole according to the present disclosure. FIG. 4 is a cross-sectional view showing an unfolded state of the length-adjustable pole according to the present disclosure, FIG. 5 is an enlarged cross-sectional view showing a state in which a length adjusting member is installed inside a length adjusting pole in a folded state inside a main pole constituting the embodiment of the present disclosure, FIG. 6 is an enlarged cross-sectional view showing a state in which the length adjusting member is engaged and fixed to the locking hole in a state in which the length adjusting pole is extended to the outside of the main pole constituting the embodiment of the present disclosure, and FIG. 7 is a front enlarged view showing a state in which the length adjusting member is engaged and fixed to the locking hole in a state in which the length adjusting pole is extended to the outside of the main pole constituting the embodiment of the present disclosure. FIG. 8 is a perspective view showing the configuration of the length adjusting member constituting the embodiment of the present disclosure, FIG. 9 is a front view showing the configuration of the length adjusting member constituting an embodiment of the present disclosure, and FIG. 10 is a side view showing the configuration of the length adjusting member constituting an embodiment of the present disclosure.

As described in these drawings, the length-adjustable pole according to the present disclosure includes: a main pole 10 formed of a hollow tubular body which is vertically elongated, having a locking hole 12 formed by penetrating back and forth on one side surface thereof, and standing on a ground; a length adjusting pole 20 formed of a hollow tubular body that is vertically elongated and installed so as to be vertically slidable inside the main pole 10; and a length adjusting member 30 elastically and deformably installed inside the main pole 10, and selectively protruded to the outside of the main pole 10 through the locking hole 12 and locked and fixed when the length adjusting pole 20 moves up and down along the inside of the main pole 10. The length adjusting member 30 comprises : a locking protrusion 32 which protrudes outwardly through the locking hole 12 when the length adjusting pole 20 is moved up and down; and a pair of elastic support pieces 40 which protrude at both ends of the locking protrusion 32 at a predetermined angle, respectively, and which are made of a flexible plate material, and one end of which is in close contact with the inner surface of the length adjusting pole 20 and the other end of which is fixed to the locking protrusion 32 so as to elastically support the locking protrusion 32 in one direction. The locking protrusion 32 comprises: a pressing part 34 formed in a block shape and having a surface inclined downwardly to guide the pressing operation of the locking protrusion 32; and a fixing part 36 extending orthogonally to a lower part of the pressing 34 part and being engaged and fixed inside the locking hole 12.

The main pole 10 is made of a metal material or a plastic material, and is formed of a hollow tubular body which is vertically elongated. Various tubular bodies such as a cylindrical tubular body or a prismatic tubular body may be applied to the main pole 10, and here, the main pole 10 will be described based on the prismatic tubular body.

The main pole 10 is used in a state where it is erected vertically or inclined on the ground, and serves to support a length adjusting pole 20 to be described later, which is installed to be able to slide up and down inside.

A locking hole 12 is formed on one side surface of the main pole 10. A plurality of locking holes 12 are formed at regular intervals along the side surface of the main pole 10.

As shown in FIG. 7, the locking hole 12 is formed in a shape of long hole and is formed to penetrate vertically. A locking protrusion 32 of a length adjusting member 30, to be described later, is inserted into the locking hole 12 and is selectively fixed.

A base 14 is installed under the main pole 10. The base 14 is formed in the shape of a block having a hexahedral shape. The lower surface of the base 14 gradually decreases in area towards the bottom, and gradually becomes sharper towards the bottom.

A portion of the base 14 is inserted into and coupled to the lower end of the main pole 10, and the remaining portion protrudes from the lower part of the main pole 10. The base 14 is attached to the lower end of the main pole 10 and serves to support the lower end of the main pole 10 so that it does not touch the ground.

A length adjusting pole 20 is installed inside the main pole 10. Like the main pole 10, the length adjusting pole 20 and is formed of a hollow tubular body which is vertically elongated. Various tubular bodies such as a cylindrical tubular body or a prismatic tubular body may be applied to the length adjusting pole 20, and here, the length adjusting pole 20 will be described based on the prismatic tubular body.

The length adjusting pole 20 has an outer diameter smaller than the inner diameter of the main pole 10. The length adjusting pole 20 is installed to slide vertically inside the main pole 10. The length adjusting pole 20 extends upwardly through the upper opening of the main pole 10 to adjust the length of the entire pole.

A first locking hole 22 may be formed on a side of the length adjusting pole 20. When the length adjusting pole in the present disclosure is used in two stages, the first locking hole 22 does not need to be formed in the length adjusting pole 20. However, if the length adjusting pole is applied in three or more stages, the first locking hole 22 should be applied.

According to the embodiment of the present disclosure to which a three-stage pole structure is applied, the first locking hole 22 will be described in detail with reference to the drawings.

The first locking hole 22, like the locking hole 12 formed in the main pole 10, is formed in a shape of long hole and is formed to penetrate vertically, as shown in FIGS. 6 and 7. A locking protrusion 32 of a first length- adjusting member 30, which will be described later, is inserted into the first locking hole 22 and is selectively fixed.

Hereinafter, the length adjusting member 30 will be described in detail with reference to FIGS. 8 to 10.

The length adjusting member 30 is installed inside the length adjusting pole 20. Essentially, the length adjusting member 30 is composed of a locking protrusion 32 and an elastic support piece 40. The locking protrusion 32 consists of a pressing part 34 formed in a block having a hexahedral shape and having a downward slope on an upper surface, and a fixing part extending orthogonally to a lower part of the pressing part 34 and being engaged and fixed inside the locking hole 12.

The pressing part 34 is formed in a hexahedral block shape having a downward slope on an upper surface, and is a part protruding forward from the locking hole 12.

That is, when the length adjusting pole 20 extends upwardly from the main pole 10, as the downward slope surface of the pressing part 34 protruding to the outside of the locking hole 12 contacts the inner edge part of the locking hole 12, the pressing operation of the locking hole 32 may be easily performed.

When the length adjusting pole 20 is pulled upwardly by the user due to the downward slope surface structure of the pressing part 34, it is in contact with the inner edge part located on the upper side of the locking hole 12. Since the locking protrusion 32 is pressed along downward slope surface, the user can easily press the locking protrusion 32 with only a pulling motion without the need to separately press the locking protrusion 32.

A fixing part 36 is formed below the pressing part 34. The fixing part 36 is formed to protrude in a direction orthogonal to the locking hole 12. The fixing part 36 protrudes in a direction orthogonal to the locking hole 12 when the locking protrusion 32 is engaged and fixed to the locking hole 12.

The locking protrusion 32 is locked in the locking hole 12 by the fixing part 36. Therefore, unless a certain or greater force is applied to the length adjusting pole 20, the locking protrusion 32 is not easily released. When the user presses the length adjusting pole 20 with a pressing force above a certain level, the locking protrusion 32 moves inwardly of the length adjusting pole 20 so that the locking of the length adjusting pole 20 may be released.

That is, when the length adjusting pole 20 is moved upward to extend the length of the length adjusting pole 20, the locking protrusion 32 is pressed along the downward slope of the pressing part 34, so that the lifting operation of the length adjusting pole 20 may be easily performed with a simple operation.

Conversely, when the length adjusting pole 20 is moved downward direction to shorten the length of the length adjusting pole 20, the user presses the length adjusting pole 20 with a pressing force above a certain level, so that the locking of the fixing part 36 and the locking hole 12 may be released.

As described above, the fixing part 36 protrudes in a direction orthogonal to the lower inside of the locking hole 12. Accordingly, when a pressing force below a certain level is applied to the length adjusting pole 20, the locking is not released, but only when a certain or greater pressing force is applied to the length adjusting pole 20. Therefore, it is possible to prevent the locking of the fixing part 36 and the locking hole 12 from being easily released when a pressing force below a certain level is applied.

Elastic support pieces 40 are installed on the upper and lower sides of the locking protrusion 32, respectively. The elastic support piece 40 is made of a flexible plate material and protrudes at a predetermined angle at both upper and lower ends of the locking projection 32. One end of the elastic support piece 40 is in close contact with the inner surface of the length adjusting pole 20, and the other end is fixed to the locking protrusion 32 so as to elastically support the locking protrusion in one direction.

In addition, a support end 42 is formed at the end of the elastic support piece 40. As shown in FIG. 9, the support end 42 is bent at the end of the elastic support piece 40 in the opposite direction to the elastic support piece 40. The support end 42 is formed bent at the end of the elastic support piece 40, and configured to be in surface contact with the inner surface of the length adjusting pole 20 to minimize the friction between the inner surface of the length adjusting pole 20 and the elastic support piece 40 when the elastic support piece 40 is elastically deformed.

Hereinafter, detailed specifications of the length adjusting member 30 will be described in detail.

In the case of the pressing part 34, it is preferable that the pressing part 34 has an inclination angle within the range of 40° to 50°.

This means that an average pulling force based on an adult is 8 kgf, and when a pulling force of 6 kgf to 8 kgf is applied to the pressing part 34 based on the pulling force of an adult, the inclination angle of the pressing part 34 must be applied within the range of 40° to 50° so that the locking protrusion may be pressed.

The length (L) and width (W) of the locking protrusion 32 are preferably formed within the ranges of 13 mm to 20 mm, and 7 mm to 7.5 mm.

Based on the inclination angle of the pressing part 34 and the straight part of the fixing part 36 formed in the range of 40° to 50° and 2mm to 5mm, the length (L) and width (W) of the locking protrusion 32 are preferably formed within the range of 13mm to 20mm, and 7mm to 7.5mm, respectively.

The length (L) and width (W) of the locking protrusion 32 should be within 13mm to 20mm and 7mm to 7.5mm respectively, based on the pulling force (6kgf to 8kgf) and pressing force (8kgf to 10kgf) of an adult, so that the operation of the locking protrusion 32 may be locked and unlocked within an appropriate design range.

In addition, in the case of the elastic support piece 40, it is preferable that the installation angle thereof is formed within the range of 30 ° to 60 °.

As previously described, a pulling force of 6kgf to 8kgf and a pressing forth of 8kgf to 10kgf of an adult may be applied to the elastic support piece 40, and considering the pulling force and pressing force, the installation angle of the elastic support piece should be applied within the range of 30° to 60° so that the elastic support piece 40 may be elastically deformed for the operation of the locking protrusion 32.

As described above, by applying the inclination angle of the pressing part 34, the length (L) and width (W) of the locking protrusion 32, and the installation angle of the elastic support piece 40 to the design, the user may smoothly extend and shorten the length adjusting pole 20 and add appropriate elasticity and locking force to maintain the locking force of the locking protrusion 32.

A first length adjusting pole 24 may be additionally installed inside the length adjusting pole 20. The first length-adjustable pole 24 may be selectively installed when the length adjusting pole according to the present disclosure consists of three stages.

The first length adjusting pole 24 has the same structure as the length adjusting pole 20, and the outer diameter of the first length adjusting pole 24 is smaller than the inner diameter of the length adjusting pole 20 so that the first length adjusting pole 24 may be slidably installed inside the length adjusting pole 20.

The first length adjusting pole 24 is installed to slide vertically inside the length adjusting pole 20, and may be extended or shortened upward along the inside of the length adjusting pole 20.

Inside the first length adjusting pole 24, like the length adjusting pole 20, a length adjusting member 30 is installed. Since the length adjusting member 30 has the same structure as the length adjusting pole 20, a detailed description thereof will be omitted.

A fixing pin member 50 is installed at an upper end of the first length adjusting pole 24. The fixing pin member 50 is composed of a fixing pin 54 and a fixing body 52. The fixing body 52 is in the form of a block having a hexahedral shape, a portion of which is press-fitted into the first length adjusting pole 24 and the remaining portion of which protrudes upwardly. The fixing body 52 is installed in the upper opening of the first length adjusting pole 24 and serves to seal the upper opening of the first length adjusting pole 24.

A fixing pin 54 is installed at the center of the upper end of the fixing body 52. The fixing pin 54 is integrally formed with the fixing body 52 and is formed in a cylindrical shape so as to be vertically elongated. The fixing pin 54 is formed to protrude upward from the center of the upper surface of the fixing body 52. A plurality of rope fixing grooves (not shown) are formed on the outer circumferential surface of the fixing pin 54, which are directly fixed to a tent, or fixed by winding a rope or string connected to the tent.

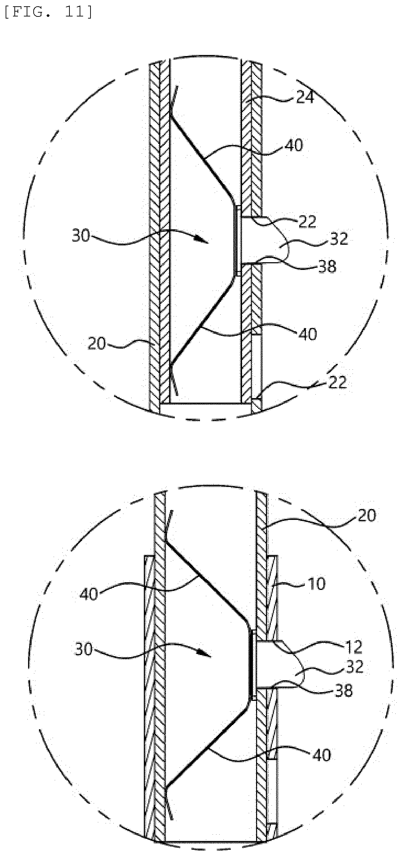

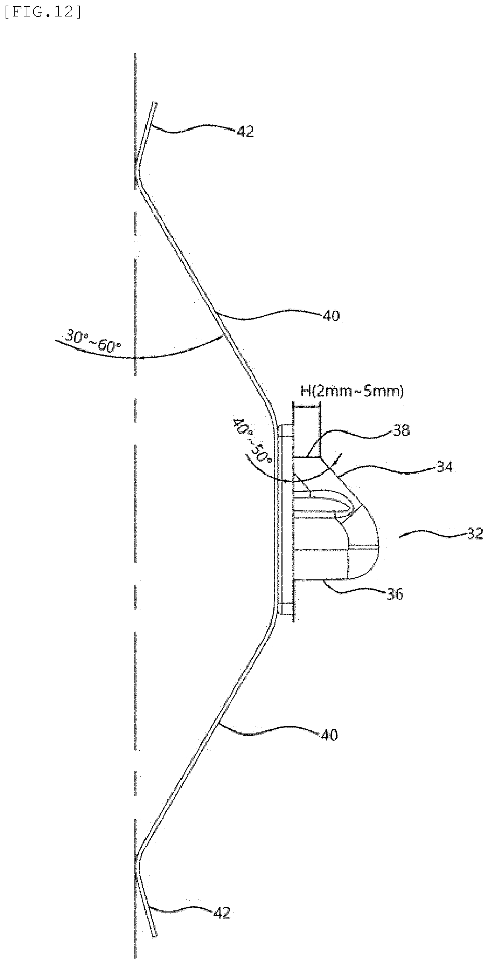

FIG. 11 is a cross-sectional view showing a state in which the locking protrusion constituting another embodiment of the present disclosure is fixed to the locking hole, and FIG. 12 shows a front view showing the configuration of a length adjusting member constituting another embodiment of the present disclosure.

With reference to FIGS. 11 and 12, the locking protrusion of the length adjusting member constituting another embodiment of the present disclosure will be described in detail.

A locking part 38 is further provided on the upper portion of the pressing part 34. The locking part 38 is formed inside the upper part of the locking hole 12 to protrude in a direction orthogonal. When the locking protrusion 32 is locked and fixed to the locking hole 12, the locking part 38 may be locked and fixed to the upper edge of the locking hole 12.

As the locking protrusion 32 is locked and fixed to the upper edge of the locking hole 12 by the locking part 38, the locking of the locking protrusion 32 may not be easily released unless more than a certain pulling force is applied to the length adjusting pole 20. When the user pulls the length adjusting pole 20 with a certain pressure or more, the locking of the locking protrusion 32 may be released and the extending operation of the length adjusting pole 20 may be performed at the same time.

In addition, the locking part 38 may be formed through the outside of the locking hole 12 and a portion thereof is arranged to protrude outwardly of the locking hole 12.

That is, as the locking part 38 protrudes in a direction orthogonal to the upper inside of the locking hole 12 and a portion of the locking part 38 protrudes outwardly from the locking hole 12. Accordingly, when a pulling force equal to or less than a certain level is applied to the length adjusting pole 20, the locking is not released, but only when more than a certain pulling force is applied to the length adjusting pole 20. Therefore, it is possible to prevent the locking of the locking part 38 and the locking hole 12 from being easily released when a pulling force equal to or less than a certain level is applied.

As the locking part 38 is formed on the upper part of the pressing part 34, the locking of the locking protrusion 32 and the locking hole 12 is not easily released, and it is possible to prevent the length- adjusting pole 20 from being extended, especially when a pulling force is applied to the length adjusting pole 20 by strong winds.

It is preferable that the straight part (H) of the locking part 38 is formed within a range of 2 mm to 5 mm.

This means that an average pulling force based on an adult is 8 kgf, and when a pulling force of 6 kgf to 8 kgf is applied to the locking part 38 based on the pulling force of an adult, the straight part (H) of the locking part 38 should be within the range of 2mm to 5mm so that the locking of the locking protrusion 32 may be released.

In addition, when the length adjusting pole 20 is pulled by strong winds, considering that a pulling force of about 6 kgf or less generally acts on the length adjusting pole 20, it is preferable that the straight part (H) of the locking part 38 is within the range of 2 mm to 5 mm.

Also, the straight part of the fixing part 36 may be formed longer than the straight part of the locking part 38.

In the case of the locking part 38, when a certain pulling force is applied, the locking should be released to adjust the length. However, in the case of the fixing part 36, if the user does not press the locking protrusion 32, the locking should be maintained. Therefore, it is preferable that the straight part (H) of the fixing part 36 is formed longer than the straight part of the locking part 38.

Hereinafter, the operation of the length-adjustable pole of the present disclosure having the above configuration will be described with reference to FIGS. 1 to 12.

First, in order for the user to extend the length-adjustable pole, the end of the length adjusting pole 20 or the first length adjusting pole 24 inserted into the main pole 10 is held by hand and pulled upwards.

The user lifts the length adjusting pole 20 from the main pole 10 to extend the length of the pole. After moving the length adjusting pole 20 upward, the user inserts the locking protrusion 32 into the locking hole 12 formed on a side of the main pole 10 to extend the length adjusting pole 20.

If the user wants to fix the locking protrusion 32 to the locking hole 12 one space above without locking at an adjacent position, the user may pull the length adjusting pole 20 at a certain speed or more to prevent the locking protrusion 32 from being locked and fixed to the locking hole 12.

That is, when the length adjusting pole 20 is moved in the extended direction, the locking protrusion 32 may be easily separated by the pressing part 34 of the locking protrusion 32. Conversely, after the extension of the length adjusting pole 20 is completed, the fixing part 36 of the locking protrusion 32 may be firmly locked in a direction orthogonal to the lower edge of the locking hole 12.

In addition, if the length adjusting pole 20 is to be shortened in a state in which the locking protrusion 32 is locked in the locking hole 12, the user moves the length adjusting pole 20 in the extended direction (upward direction), press the locking protrusion 32 to be elastically deformed inside the main pole 10, and then move the length adjusting pole 20 in a downward direction at a high speed. In this way, the shortened operation of the length adjusting pole 20 may be performed.

The length-adjustable pole of the present disclosure may be applied as a length-adjustable extension component capable of length adjustment in various fields other than for tarps and tents in the leisure industry.

The scope of the present disclosure is not limited to the embodiments exemplified above, and many other modifications based on the present disclosure may be possible to those skilled in the art within the above technical scope.

## Claims

1. A length-adjustable pole comprising:
a main pole formed of a hollow tubular body which is vertically elongated, having a locking hole formed by penetrating back and forth on one side surface thereof, and standing on a ground;
a length adjusting pole formed of a hollow tubular body which is vertically elongated and installed so as to be vertically slidable inside the main pole; and
a length adjusting member elastically and deformably installed inside the main pole and selectively protruded to the outside of the main pole through the locking hole to be locked and fixed when the length adjusting pole moves up and down along the inside of the main pole,
wherein the length adjusting member comprises:
a locking protrusion protruding outwardly through the locking hole when the length adjusting pole is moved up and down; and
a pair of elastic support pieces protruding at both ends of the locking protrusion at a predetermined angle, respectively, the pair of elastic support pieces made of a flexible plate material and having one end in close contact with the inner surface of the length adjusting pole and the other end fixed to the locking protrusion so as to elastically support the locking protrusion in one direction.

2. The length-adjustable pole of claim 1, wherein the locking protrusion comprises:
a locking part extending orthogonally at the upper portion of the locking protrusion and being locked and fixed to the inside of the upper part of the locking hole;
a fixing part extending orthogonally at the lower part of the locking protrusion and being locked and fixed to the inside of the lower part of the locking hole; and
a pressing part having a surface inclined downwardly between the locking part and the fixing part to guide the pressing operation of the locking protrusion.

3. The length-adjustable pole of claim 2, wherein the locking part is formed through the outside of the locking hole, and a portion thereof is arranged to protrude outwardly of the locking hole.

4. The length-adjustable pole of claim 2, wherein the straight part of the fixing part is formed longer than the straight part of the locking part.

5. The length-adjustable pole of claim 2, wherein the straight part (H) of the locking part is in the range of 2 mm to 5 mm.

6. The length-adjustable pole of claim 1, wherein the angle of the elastic support piece is installed ranges from 30 ° to 60 °.

7. The length-adjustable pole of claim 1, wherein the length (L) of the locking protrusion is in the range of 13 mm to 20 mm.

8. The length-adjustable pole of claim 1, wherein the width (W) of the locking protrusion is in the range of 7mm to 7.5mm.
